Europäisches Patentamt

European Patent Office

Office européen des brevets

(19)

(11) Veröffentlichungsnummer : **0 365 574 B1**

# (12) EUROPÄISCHE PATENTSCHRIFT

(45) Veröffentlichungstag der Patentschrift :
**11.03.92 Patentblatt 92/11**

(51) Int. Cl.⁵ : **F16H 57/04**

(21) Anmeldenummer : **88905791.5**

(22) Anmeldetag : **30.06.88**

(86) Internationale Anmeldenummer :
**PCT/EP88/00580**

(87) Internationale Veröffentlichungsnummer :
**WO 89/00260 12.01.89 Gazette 89/02**

(54) **VORRICHTUNG ZUR REINIGUNG VON SCHMIERÖL IM GETRIEBE.**

(30) Priorität : **07.07.87 DE 3722392**

(43) Veröffentlichungstag der Anmeldung :
**02.05.90 Patentblatt 90/18**

(45) Bekanntmachung des Hinweises auf die
Patenterteilung :
**11.03.92 Patentblatt 92/11**

(84) Benannte Vertragsstaaten :
**DE GB**

(56) Entgegenhaltungen :
**US-A- 2 328 104**
**US-A- 3 014 643**
**Patent Abstracts of Japan, Band 5, Nr. 25**
**(M-55)(697), 14. Februar 1981, & JP, A,**
**55152952 (HONDA GIKEN KOGYO K.K.) 28.**
**November 1980**

(73) Patentinhaber : **ZAHNRADFABRIK**
**FRIEDRICHSHAFEN AKTIENGESELLSCHAFT**
**Löwentaler Strasse 100 Postfach 2520**
**W-7990 Friedrichshafen 1 (DE)**

(72) Erfinder : **FÜHRER, Gerd**
**Porscheweg 5**
**W-7990 Friedrichshafen (DE)**
Erfinder : **HEINZELMANN, Karl-Fritz**
**Schusterstrasse 25**
**W-7996 Meckenbeuren (DE)**
Erfinder : **OSTERLOFF, Kurt**
**Steffelinweg 6**
**W-7990 Friedrichshafen (DE)**

## Beschreibung

Die Erfindung betrifft eine Vorrichtung zur Reinigung von Schmieröl in einem Getriebe nach dem Oberbegriff von Anspruch 1.

Bei hochbelasteren Getrieben ist es allgemein bekannt, eine verbesserte Schmierung und Kühlung von Wellen und Zahnradlagern sowie von Zahneingriffen über eine Druckölschmiereinrichtung zu erreichen. Dazu ist im oder am Getriebe eine Schmierölpumpe angeordnet, die aus einem Ölreservoir, vorrangig dem Sumpf des Getriebes, Schmieröl fördert und über Kanäle und Druckleitungen gezielt den besonders belasteten Getriebeelementen zuführt. In der Saugleitung, und bei ausserhalb des Getriebes angeordneten Pumpen auch in der Druckleitung, sind zur Reinigung des Schmieröls Filter angeordnet, um die im Betrieb entstehenden Verschmutzungen des Schmieröls in Grenzen zu halten.

Die Bestimmung der Feinheit des Filters ist problematisch, weil auf der einen Seite möglichst feine Verunreinigungen abgefiltert werden sollen, und auf der anderen Seite aber eine Verstopfung des Filters verhindert werden muß. Selbst wenn es zu keiner generellen Verstopfung kommt, wird die Durchflußmenge durch einen weitestgehend zugesetzten Filter erheblich verringert und damit die Schmierung und Kühlung besonders gefährdeter Lager stark beeinträchtigt.

Es ist auch schon ein Zentrifugalfilter bekannt, bei dem das Schmieröl über einen im Querschnitt relativ kleinen Kanal einem im Durchmesser großen Rotationsraum zugeführt wird, so daß sich die Strömungsgeschwindigkeit stark reduziert und das Schmieröl die Rotation annimmt und die Verunreinigungen des Schmieröls an die Mantelfläche geschleudert werden, so daß aus dem Zentrum des Rotationsraumes das gereinigte Schmieröl abgeführt und an die Verbraucher weitergeleitet werden kann.

Es ist deshalb Aufgabe der Erfindung, die Reinigung von Schmieröl im Zusammenhang mit dem Umlauf desselben im Getriebe mit möglichst einfachen Mitteln zu verbessern.

Diese Aufgabe wird mit den Merkmalen nach der Vorrichtung nach Anspruch 1 erfüllt.

Mit der Ausnutzung der Zentrifugalkraft im Getriebe zur Reinigung von Schmieröl von Schmutz- und Metallpartikeln können auch sehr feine Verunreinigungen beseitigt werden, ohne daß die Gefahr besteht, die Fördermenge des Schmieröls durch einen verringerten Durchfluß, z. B. durch einen verstopften Filter, zu reduzieren bzw. ganz zu unterbinden, so daß es zu einem Trockenlaufen der Lager kommen kann.

Durch die Anordnung eines Rotationsraumes in einer mit hoher Umdrehung umlaufenden Welle des Getriebes wird allein durch die Vergrößerung des Durchmessers eines Schmierölkanals und der damit sich verringerten Durchflußgeschwindigkeit des Schmieröls dieses in Rotation versetzt, so daß die Verunreinigungen sich an der Mantelfläche des Rotationsraumes ablagern. In einfacher Weise kann dann aus dem Zentrum dieses Rotationsraumes das gereinigte Schmieröl zu den Verbrauchern - z. B. Wellen und Zahnradlagern - in bekannter Weise weiterbefördert werden.

So wird die Ablagerung der Verunreinigung des Schmieröls am Mantel des Rotationsraumes begünstigt, wenn der Förderstrom des Schmieröl, das aus einem quer zum Rotationsraum angeordneten Kanal von der Schmiermittelpumpe kommt, über ein in Längsrichtung sich erstreckendes Rohr unterbrochen wird. Das noch verschmutzte Schmieröl verbleibt dann in einem Ringraum nahe an der Mantelfläche des Rotationsraumes. Wird der, von der Schmierölförderpumpe kommende, quer zum Rotationsraum angeordnete Schmierölkanal nicht mittig, sondern tangential zur Mantelfläche angeordnet, fließt das noch verschmutzte Schmieröl noch näher an der Mantelfläche ein und wird mit einem zusätlichen Drall versehen. Dadurch wird die Fliehkraftwirkung verstärkt. Über eine Aufweitung dieses Rohres kann die Strömung des Schmieröls noch näher an die Mantelfläche herangeleitet werden. Die Schmutz- und Abriebteilchen verdichten sich an der Mantelfläche des Rotationsraumes zu einem Schmutzfilm und haften dort. Das Abflußrohr ragt in den Rotationsraum hinein, so daß beim Stillstand der Welle eventuell noch nicht haftende Schmutzteile oder solche, die sich nicht sofort an die Stirnseite angelagert haben, nicht in das Abflußrohr gelangen. Mit einem Ringmagnet, zumindest an einem Teil der Mantelfläche, kann die Reinigung des Schmieröls besonders von magnetischen Verschmutzungen zusätlich zur, aus der Zentrifugalkraft herrührenden Reinigungswirkung noch verbessert werden. Besonders vorteilhaft ist die Anordnung des Rotationsraumes zur Reinigung des Schmieröls in der Getriebeeingangswelle eines im Vorgelegebauweise angeordneten Getriebes, weil die Eingangswelle mit einer hohen Drehzahl umläuft und auf ihr oder in ihrer Nähe die Schmierölförderpumpe angeordnet ist und weil durch die Anformung des Synchronkörpers oder eines Zahnrades an die Eingangswelle sich eine Durchmesservergrößerung ergibt, die die Anordnung des Rotationsraumes mit einem großen Manteldurchmesser begünstigt.

Durch die Merkmale der abhängigen Ansprüche wird die Erfindung vorteilhaft ausgestaltet.

In der US-A-3 014 643 ist ein Zentrifugalfilter beschrieben, das in Verbindung mit einer Brennkraftmaschine angeordnet ist. Für das Zentrifugalfilter ist ein gesondertes Gehäuse mit Trennwänden und einem Deckel zum Verschließen vorgesehen und der Antrieb erfolgt über die Kurbelwelle der Brennkraftmaschine. Das gesonderte Gehäuse ist dabei in der Riemenscheibe angeordnet. Auch aus der JP-A 55/152952 ist ein Zentrifuga-

2

EP 0 365 574 B1

lölfilter zwischen einer Schwungscheibe und dem eigentlichen Getriebe gesondert angeordnet, bei dem es sich um eine hydrostatisches Getriebe handelt.

Weitere Einzelheiten der Erfindung werden anhand von Zeichnungen und an einem Ausführungsbeispiel erläutert. Es zeigen

Fig. 1 die Anordnung eines Rotationsraumes im inneren einer Antriebswelle eines Getriebes mit einer Schmiermittelpumpe auf der Antriebswelle im Teilschnitt,

Fig. 2 einen Teilschnitt mit einem Ölkanal, der in den Rotationsraum in der Antriebswelle führt,

Fig. 3 einen Querschnitt des Ölkanals, der tangential zur Mantelfläche des Rotationsraumes angeordnet ist.

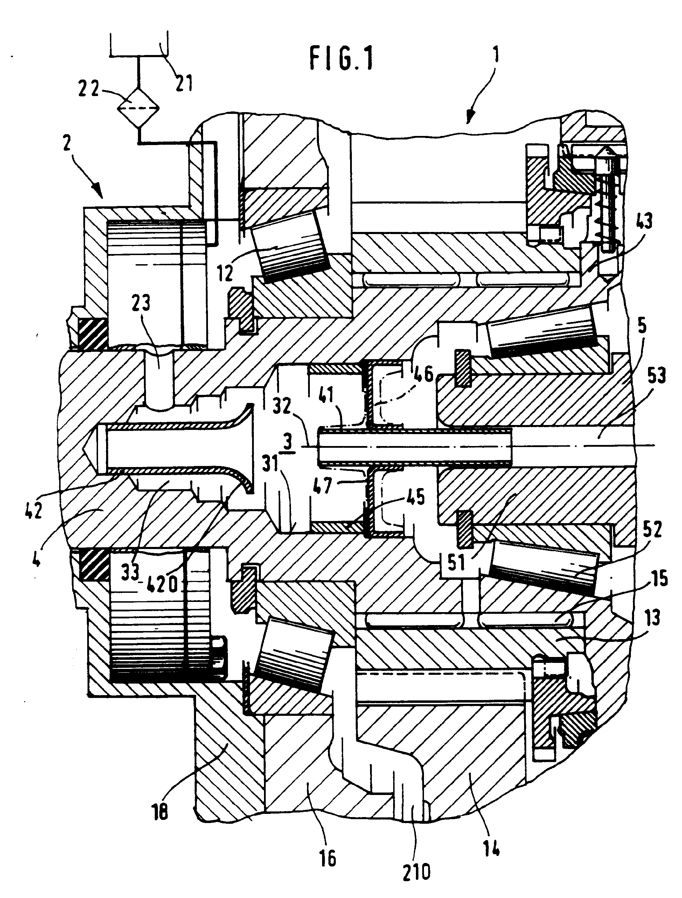

In Fig. 1 ist in einem Teilschnitt ein Getriebe 1 im Bereich der Eingangswelle 4 dargestellt, die über Lager 12 im Getriebegehäuse 16 gelagert ist. Von dieser Welle wird eine Schmiermittelpumpe 2 angetrieben, die in einem Gehäuseteil 18 angeordnet ist und die Schmiermittel aus einem Behälter 21 vorrangig aus dem Sumpf 210 des Getriebes über einen Filter 22 ansaugt und über den Kanal 23 in einen Rotationsraum 3 führt. Der Rotationsraum 3 erstreckt sich in Längsrichtung der Getriebeeingangswelle 4 und verbreitert sich auf einen möglichst großen Durchmesser, der infolge eines angeformten Synchronkörpers 43 im Durchmesser relativ groß ist. Stirnseitig, in Richtung auf das Getriebe zu, wird dieser Rotationsraum durch einen Körper 46 abgeschlossen, in dessen Mitte ein Abflußrohr 41 angeformt oder befestigt ist. Dabei kann dieser Körper 46, wie in dem Halbschnitt dargestellt, z. B. aus einem Plastikteil bestehen, in dem das Abflußrohr 41 einteilig enthalten ist. Es kann aber auch ein Blechteil 47 sein, an dem das Rohr 41 gehalten wird. Das Rohr 41 ragt in eine zentrische Bohrung 53 einer Getriebehauptwelle 5, die über ihren Zapfen 51 und das Lager 52 in der Getriebeeingangswelle 4 gelagert ist, hinein. Zumindest in der Ebene des Kanals 23 ragt noch ein Rohr 42 mit einem trichterförmigen Ende 420 in den Rotationsraum hinein, und das Abflußrohr 41 hat gleichfalls einen Überstand zum Körper 46 bzw. dem Blechteil 47 in Richtung des Rotationsraumes. Auf der Getriebeeingangswelle 4 ist über z. B. Nadellager 15 noch ein Zahnrad 13 angeordnet, das mit einem auf der Vorgelegewelle angeordneten Zahnrad 14 kämmt.

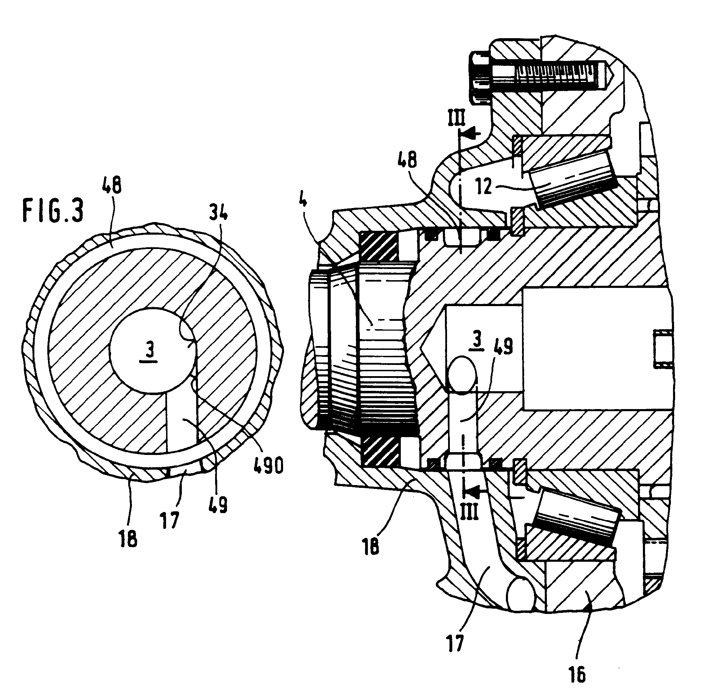

Die Fig. 2 entspricht im Prinzip der Fig. 1. Auch hier ist der Rotationsraum 3 in der Eingangswelle 4 angeordnet. Da die Schmiermittelpumpe jedoch auf der nicht dargestellten Vorgelegewelle angeordnet ist, wird das Schmier- und Kühlmittel über einen im Getriebegehäuse 16 angeordneten Kanal 17 einem in der Getriebeeingangswelle 4 ausgebildeten Ringraum 48 zugeleitet, von dem ein Kanal 49 ausgeht, der in dem Rotationsraum mündet, wobei, wie die Fig. 3 zeigt, dieser Kanal 49 tangential 490 zur Mantelfläche 34 angeordnet ist.

Die Vorrichtung zur Reinigung von Schmieröl im Getriebe wirkt wie folgt:

Von einer Schmiermittelpumpe 2 wird Schmiermittel aus einem Behälter 21 oder aus einem Sumpf 210 über ein Filter 22 angesaugt und über den Kanal 23 (Fig. 1) oder 49 (Fig. 2 und 3) in den Rotationsraum 3 geleitet. Von dem Rohr 42 mit dem trichterförmigen Ende (Aufweitung) 420 wird das Schmiermittel in Richtung auf den Mantel 31 des Rotationsraumes zu umgelenkt und bewegt sich im Ringraum 33 bei gleichzeitiger Verlangsamung der Strömung infolge der Querschnittserweiterung in axialer Richtung auf das Aflußrohr 41 zu. Infolge der Drehbewegung der Getriebeeingangswelle 4 und der Mantelfläche 31, die relativ hoch ist, wird auch das Schmiermittel in Rotation versetzt, und die Verunreinigungen werden an die Mantelfläche geschleudert. Aus dem Zentrum 32 heraus wird dann über das Rohr 41 das gereinigte Schmiermittel abgeleitet und über die Bohrung 53 in der Getritbehauptwelle den Lagern z. B. 52, 15 und 12 in bekannter Weise zugeleitet. An der Mantelfläche 31 bildet sich ein fester Schmutzfilm, der auch beim Stillstand des Getriebes haftet. Zur Verstärkung der Reinigungswirkung kann an der Mantelfläche 31 oder einem Teil dieser Mantelfläche noch ein Ringmagnet 45 angeordnet sein.

## Patentansprüche

1. Vorrichtung zur Reinigung von Schmieröl in oder an einem Wechselgetriebe (1) mit einer Getriebeeingangswelle (4), an die ein Zahnrad oder ein Synchronkörper (43) angeformt und in der eine Getriebehauptwelle (5) gelagert ist, wobei über eine Schmiermittelpumpe (2), die von der Getriebeeingangswelle (4) oder einer Vorgelegewelle angetrieben wird, Schmieröl aus einem Behälter (21), vorrangig aus dem Sumpf (210) des Getriebes (1), gefördert und das Schmieröl über ein Filter (22) mittels einer Druckschmierung an Wellenlager (12, 52), Zahnradlager (15) und Zahnräder (13, 14) gefördert wird, dadurch **gekennzeichnet**, daß innerhalb der Eingangswelle (4) ein Rotationsraum (3) eines an und für sich bekannten Zentrifugalfilters angeordnet ist, das über einen im Querschnitt kleinen, quer zum Rotationsraum (3) angeordneten und von radial außen von der Schmiermittelpumpe (2) kommenden Schmiermittelkanal (23) befüllt wird, und daß über ein im Zentrum (32) des Rotationsraumes (3) angeordnetes, in diesen Raum (3) hineinragendes Abflußrohr (41) das nachgereinigte Schmieröl zu den Lagern (12, 52, 15) und Zahrädern (13, 14) geleitet wird.

3

2. Vorrichtung nach Anspruch 1, dadurch **gekennzeichnet**, daß der Rotationsraum (3) stirnseitig in Richtung auf das Getriebe (1) zu durch einen Körper (46) abgeschlossen wird, in dem das Abflußrohr (41), das in eine Bohrung (53) der Getriebehauptwelle (5) hineinragt, befestigt ist.

3. Vorrichtung nach Anspruch 2, dadurch **gekennzeichnet**, daß der den Rotationsraum (3) in Richtung auf das Getriebe (1) zu abschließende Körper (46) mit dem Rohr (41), das in die Bohrung (53) der Getriebehauptwelle (5) hineinragt, einteilig ausgeführt ist.

4. Vorrichtung nach Anspruch 1, dadurch **gekennzeichnet,** daß ein in Längsrichtung sich erstreckendes Rohr (42) im Rotationsraum (3) angeordnet ist, so daß das von der Schmiermittelpumpe (2) geförderte Schmieröl zunächst in einen Ringraum (33) gelangt und dann axial weitergeleitet wird.

5. Vorrichtung nach Anspruch 1, dadurch **gekennzeichnet**, daß der Kanal (23, 49) von der Schmierölförderpumpe (2) zum Rotationsraum (3) tangential (490) zur Mantelfläche (34) des Rotationsraumes (3) angeordnet ist.

6. Vorrichtung nach Anspruch 4, dadurch **gekennzeichnet,** daß der Rohr (42), das den Ringraum (33) nach innen abschließt, an seinem in den Rotationsraum (3) hineinragenden Ende (420) trichterförmig nach radial außen aufgeweitet ist.

7. Vorrichtung nach Anspruch 1, dadurch **gekennzeichnet**, daß an der Mantelfläche (31, 34) oder einem Teil der Mantelfläche (31) der Rotationsraumes (3) ein Ringmagnet (45) angeordnet ist.

## Claims

1. Device for cleaning lubricating oil in or on a gear change box (1), with a drive input shaft (4), on which a gearwheel or a detent (43) is integrally formed and in which a main drive shaft (5) is mounted, wherein via a lubricant pump (2), which is driven by the drive input shaft (4) or a transmission shaft, lubricating oil is pumped from a reservoir (21 ) primarily from the sump (210) of the gearbox (1), and the lubricating oil is pumped via a filter (22) by means of pressure lubrication to shaft bearings (12, 52), gearwheel bearings (15) and gearwheels (13, 14), characterised in that a rotation chamber (3) of a centrifugal filter, which is known per se, is mounted inside the input shaft (4) and is filled via a lubricant channel (23) of small diameter mounted transverse to the rotation chamber (3) and coming from radially outside from the lubricant pump (2), and in that the subsequently cleaned lubricating oil passes to the bearings (12, 52, 15) and gearwheels (13, 14) via a discharge tube (41) projecting into this chamber (3) and mounted in the fulcrum (32) of the rotation chamber (3).

2. Device according to claim 1, characterised in that the rotation chamber (3) is sealed at the end in the direction of the gearbox (1) by a body (46) in which the discharge tube (41), which projects into a bore (53) of the main drive shaft (5), is fixed.

3. Device according to claim 2, characterised in that the body (46), which has the tube (41) projecting into the bore (53) of the main drive shaft (5) and which seals the rotation chamber (3) in the direction of the gearbox (1), is formed in one piece.

4. Device according to claim 1, characterised in that a tube (42) extending in the longitudinal direction is mounted in the rotation chamber (3), so that the lubricating oil pumped from the lubricant pump (2) first passes into an annular chamber (33) and is then passed on axially.

5. Device according to claim 1, characterised in that the channel (23, 49) from the lubricant pump (2) to the rotation chamber (3) is mounted tangentially (490) to the surface (34) of the rotation chamber (3).

6. Device according to claim 4, characterised in that the tube (42) sealing the annular chamber (33) on the inside is widened radially outwards in the form of a funnel at its end (420) projecting into the rotation chamber (3).

7. Device according to claim 1, characterised in that a ring magnet (45) is mounted on the surface (31, 34) or on a part of the surface (31) of the rotation chamber (3).

## Revendications

1. Dispositif de purification d'huile de lubrification dans ou sur une boîte de vitesses (1), avec un arbre d'entrée de la boîte (4) auquel sont intégrés une roue dentée ou un corps de synchronisation (43) et dans lequel est logé un arbre principal de boîte (5), sachant que de l'huile de lubrification est refoulée d'un réservoir (21), principalement de la cuvette-carter à huile (210) de la boîte (1) par une pompe de lubrification (2) entraînée par l'arbre d'entrée de la boîte (4) ou un arbre de renvoi et que l'huile de lubrification, après avoir passé par le filtre (22), est amenée aux roulements d'arbre (12, 52), au roulement de la roue dentée (15) et aux roues dentées (13, 14) au moyen d'une lubrification sous pression, **caractérisé** en ce qu'il existe à l'intérieur de l'arbre d'entrée (4) une chambre de rotation (3) d'un filtre centrifuge déjà connu qui est rempli par un canal de lubrification de section de petite taille disposé de biais par rapport à la chambre de rotation (3) et arrivant de l'extérieur de façon radiale de la pompe de lubrification (2) et que l'huile de lubrification repurifiée est amenée aux roulements (12, 52, 15) et roues dentées (13, 14) par un tube d'écoulement (41) disposé au centre (32) de la chambre de rotation (3) et débouchant dans cette chambre (3).

2. Dispositif selon la revendication 1, **caractérisé** en ce que la chambre de rotation (3) est fermée sur la face en direction de la boîte (1) par un corps (46) dans lequel est fixé le tube d'écoulement (41) qui débouche dans un perçage (53) de l'arbre principal de la boîte (5).

3. Dispositif selon la revendication 2, **caractérisé** en ce que le corps (46) qui ferme la chambre de rotation (3) en direction de la boîte (1) est réalisé en une seule pièce avec le tube (41) qui débouche dans le perçage (53) de l'arbre principal de la boîte (5).

4. Dispositif selon la revendication 1, **caractérisé** en ce qu'un tube (42) s'étendant dans le sens longitudinal est disposé dans la chambre de rotation (3), de sorte que l'huile de lubrification refoulée par la pompe de lubrification (2) est d'abord conduite dans un espace annulaire (33) et poursuit ensuite sa progression dans le sens axial.

5. Dispositif selon la revendication 1, **caractérisé** en ce que le canal (23, 49) allant de la pompe d'alimentation en huile de lubrification (2) à la chambre de rotation (3) est disposé de facon tangentielle (490) par rapport à l'enveloppe (34) de la chambre de rotation (3).

6. Dispositif selon la revendication 4, **caractérisé** en ce que le tube (42) qui ferme l'espace annulaire (33) vers l'intérieur présente un élargissement radial vers l'extérieur en entonnoir sur son extrémité (420) débouchant dans la chambre de rotation (3).

7. Dispositif selon la revendication 1, **caractérisé** en ce qu'un aimant torique (45) est disposé sur l'enveloppe (31, 34) ou sur une partie de l'enveloppe (31) de la chambre de rotation (3).

# FIG.1

FIG.3